(19) Europäisches Patentamt
European Patent Office
Office européen des brevets

(11) **EP 2 607 736 B1**

(12) **EUROPEAN PATENT SPECIFICATION**

(45) Date of publication and mention
of the grant of the patent:
**03.12.2014 Bulletin 2014/49**

(51) Int Cl.:
*F16D 55/00* *(2006.01)*    *F16D 49/00* *(2006.01)*

(21) Application number: **11195558.9**

(22) Date of filing: **23.12.2011**

(54) **Braking device, particularly for fast vehicles with high inertia**

Bremsvorrichtung, insbesondere für schnelle Fahrzeuge mit hoher Trägheit

Dispositif de freinage, particulièrement pour les véhicules rapides à inertie élevée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2013 Bulletin 2013/26**

(73) Proprietor: **Viteg S.r.l.**
**35122 Padova (IT)**

(72) Inventor: **Trolese, Vittorio**
**35139 Padova (IT)**

(74) Representative: **Modiano, Micaela Nadia**
**Modiano & Partners (IT)**
**Via Meravigli, 16**
**20123 Milano (IT)**

(56) References cited:
**EP-A1- 0 412 541        EP-A1- 1 855 023**
**WO-A1-2010/109504    DE-A1- 4 305 307**
**DE-A1- 19 626 901**

**Description**

The new braking device can be applied to any vehicle with a disc or drum braking system.
A braking device with two sets of brake pads is for instance known from DE-A-196 26 901. Basically it is designed for braking applications on heavy vehicles, in particular medium and high-speed rail vehicles.

It basically consists of two pairs of disc brake pads that act alternately over the entire period of the braking action. That is to say, if the braking time is 30 seconds, the first brake pair functions for 15 seconds and the second brake pair functions for 15 seconds. The release and application of the first and second pair occurs gradually so that the normal force acting is always constant.

In particular the device can be used to solve the serious braking problems of the ETR-500 ("pendolino" high-speed train). In fact all the fluid mechanic and thermal stresses that affect the brake pads and discs are reduced to the minimum. In conventional braking such stresses are borne by a single pair of brake pads, the action of which must withstand temperatures of up to 550°C. The formation of heat stains (700° - 800°C) on the brake disc, and consequent cracking of the disc, is inevitable. Disastrous events have occurred on pendolino trains owing to the disintegration of a disc because of high braking temperatures.

Modifications have been attempted by makers of braking systems and are still being tested. Steel brake discs with ceramic alloy brake pads have been trialled without success, but this solution seemed to be the only applicable one, so that in order to ensure the safety of passengers it was decided to reduce the operating speed.

With the application of the device according to the invention the formula for calculating the average friction coefficient between disc and pad does not undergo any variation. In fact, according to the FICHE 541.3 standard, it is:

$$\mu = \frac{V^2 \cdot m}{2S} \; W \qquad \frac{R}{2\, F_n \cdot 981 \cdot r}$$

where

- V = speed in "m/sec"
- m = load per wheel in "Kg"
- S = stopping space in "m"
- W = resistance to motion in "N"
- Fn = normal force on each brake pad in "Kg"
- R = wheel radius in "m"
- R = braking radius in "m"

The clearest advantages of the device according to the invention are:

- Absence of overheating of the disc
- Less wear of the disc
- Absence of noise and whistling
- Efficient braking under all weather and operating conditions
- Extremely low braking temperatures (disc/gasket)
- Less wear of the brake pads
- The disc and the brake pads are subjected to less dynamic and mechanical stresses (scoring, cracks)
- The same braking system, to which the necessary modifications will be made, can be used, the cost of which is extremely low.

Drum brakes or disc brakes used in vehicles must be suitably dimensioned to enable good braking. They must not show signs of fatigue, i.e. even with successive brakings they must not heat up excessively. In order to achieve these conditions it is necessary that the brakes be adequately cooled. When dealing with fast vehicles, provided with considerable inertia, it is difficult to obtain an efficient brake since the amount of heat developed during braking is considerable and the disposal thereof would necessitate lengthy rest times or extensive radiating surfaces which cannot be achieved with the current shapes of vehicles. This problem is greatly felt, especially in high speed trains, and it is still unsolved today.

The aim of the present invention is to provide a braking system that makes possible a satisfactory disposal of the heat without having to resort to enormous braking masses.

The peculiarity of the invention consists in providing two pairs of disc brake pads which act alternately over the entire period of the braking action for preset periods, so that when one brake pad is braking, the other one is not touching the disc and thus is in a condition where it can cool.

This solution is shown in the accompanying drawings in an embodiment illustrated by way of non-limiting example, wherein

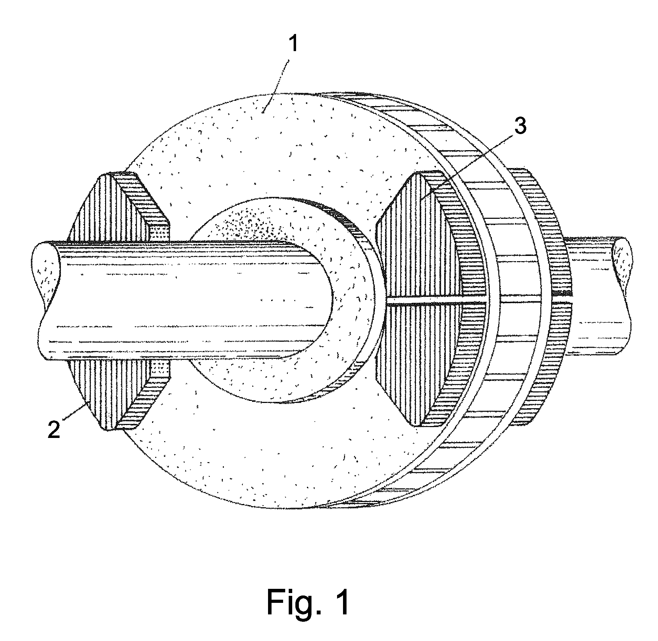

Figure 1 is a perspective view of a disc to which two separate braking pads are applied;

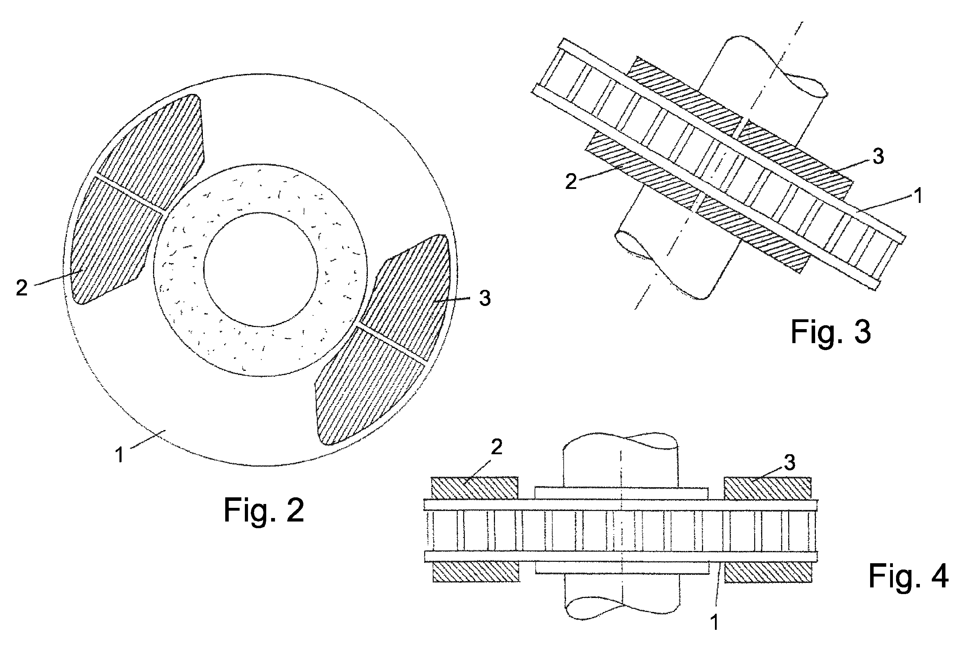

Figures 2, 3 and 4 are three sectional views of the disc according to the invention.

With reference to the figures, a disc 1 is provided with two separate pairs of brake pads 2 and 3, preferably arranged diametrically opposite each other.

From tests carried out it has been found that if alternate braking cycles are executed by applying first one pad and then the other, the fatigue of the pads is greatly reduced than if, under the same conditions, only one pad is used.

It has also been found that, with respect to the use of individual pads, the use of pairs of larger pads, divided into two separate pairs, considerably improves the problem of overheating.

The device can be used to solve the serious braking problems in high speed trains with the advantage of reducing to the minimum all the fluid mechanic and thermal stresses that currently affect pads and discs.

In conventional braking such stresses are borne by a single pair of brake pads, which must withstand temperatures of up to 800°C. The formation of heat stains on the brake disc, and consequent cracking of the disc which can result in its disintegration, is therefore inevitable.

The proposed device is described and illustrated for disc brakes but it is evident that it can also be applied to drum brakes.

Formal and structural variations can be made to the invention without for this reason going outside the scope of the patent which remains defined by the appended claims.

**Claims**

1. A braking device, particularly for fast vehicles, **characterized in that** it is provided with two separate pairs of brake pads (2, 3) that are adapted to act alternately by first applying a first one of said pairs of brake pads and then by subsequently applying a second one of said pairs of brake pads while the first one is released over the entire period of the braking action.

2. The braking device according to claim 1, **characterized in that** the device comprises a disc (1) to which said two separate pairs of brake pads (2, 3) are applied.

3. The braking device according to the preceding claims, **characterized in that** the braking cycle can involve both equal braking times, for each pair of brake pads (2, 3), and also different times.

4. The braking device according to the preceding claims, **characterized in that** said two separate pairs of brake pads (2, 3) are adapted to provide a gradual release and application of the alternate actuation of the pairs of brake pads (2, 3) such that the normal force acting is always constant.

5. The braking device according to claim 2, **characterized in that** said two separate pairs of brake pads (2, 3) are adapted to provide for one brake pad braking while the other brake pad is not touching the disc (1).

6. The braking device according to claim 2, **characterized in that** the two separate pairs of brake pads (2, 3) are arranged diametrically opposite each other with respect to said disc (1).

**Patentansprüche**

1. Eine Bremsvorrichtung, insbesondere für schnelle Fahrzeuge, **dadurch gekennzeichnet, dass** sie mit zwei separaten Paaren von Bremsklötzen (2, 3) ausgestattet ist, die ausgebildet sind, um abwechselnd zu arbeiten, indem zunächst ein erstes der Paare von Bremsklötzen eingesetzt wird und dann ein zweites der Paare von Bremsklötzen eingesetzt wird, während das erste losgelassen wird, über den gesamten Zeitraum des Bremsvorgangs.

**2.** Die Bremsvorrichtung gemäß Anspruch 1, **dadurch gekennzeichnet, dass** die Vorrichtung eine Scheibe (1) umfasst, an der zwei separate Paare von Bremsklötzen (2, 3) angebracht werden.

**3.** Die Bremsvorrichtung gemäß den obigen Ansprüchen, **dadurch gekennzeichnet, dass** der Bremszyklus sowohl gleiche Bremszeiten für jedes Paar von Bremsklötzen (2, 3) als auch verschiedene Zeiten beinhalten kann.

**4.** Die Bremsvorrichtung gemäß den obigen Ansprüchen, **dadurch gekennzeichnet, dass** die zwei separaten Paare von Bremsklötzen (2, 3) ausgebildet sind, um eine allmähliche Loslösung und Ausübung der abwechselnden Betätigung der Paare von Bremsklötzen (2, 3) bereitzustellen, so dass die wirkende Normalkraft immer konstant ist.

**5.** Die Bremsvorrichtung gemäß Anspruch 2, **dadurch gekennzeichnet, dass** die zwei separaten Paare von Bremsklötzen (2, 3) ausgebildet sind, um dafür zu sorgen, dass ein Bremsklotz bremst, während der andere Bremsklotz die Scheibe (1) nicht berührt.

**6.** Die Bremsvorrichtung gemäß Anspruch 2, **dadurch gekennzeichnet, dass** die zwei separaten Paare von Bremsklötzen (2, 3) mit Bezug auf die Scheibe (1) einander diametral gegenüber angeordnet sind.

**Revendications**

**1.** Dispositif de freinage, destiné en particulier à des véhicules rapides, **caractérisé en ce qu'**il est doté de deux paires distinctes de garnitures de frein (2, 3) qui sont conçues de façon à agir tour à tour en appliquant dans un premier temps une première desdites paires de garnitures de frein, et en appliquant ensuite une seconde desdites paires de garnitures de frein tandis que la première est libérée au cours de la période entière de l'action de freinage.

**2.** Dispositif de freinage selon la revendication 1, **caractérisé en ce que** le dispositif comprend un disque (1) auquel sont appliquées lesdites deux paires distinctes de garnitures de frein (2, 3).

**3.** Dispositif de freinage selon les revendications précédentes, **caractérisé en ce que** le cycle de freinage peut impliquer des durées de freinage égales pour chaque paire de garnitures de frein (2, 3), et également des durées différentes.

**4.** Dispositif de freinage selon les revendications précédentes, **caractérisé en ce que** lesdites deux paires distinctes de garnitures de frein (2, 3) sont conçues pour fournir un desserrage et une application progressifs de la mise en action alternative des paires de garnitures de frein (2, 3) de telle sorte que la force normale qui agit soit toujours constante.

**5.** Dispositif de freinage selon la revendication 2, **caractérisé en ce que** lesdites deux paires distinctes de garnitures de frein (2, 3) sont conçues de façon à ce qu'une garniture de frein freine, tandis que l'autre garniture de frein ne touche pas le disque (1).

**6.** Dispositif de freinage selon la revendication 2, **caractérisé en ce que** les deux paires distinctes de garnitures de frein (2, 3) sont agencées de manière diamétralement opposées l'une par rapport à l'autre en ce qui concerne ledit disque (1).

Fig. 1

Fig. 3

Fig. 4

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19626901 A